# FASCICULE DE BREVET EUROPEEN

(11) **EP 1 026 530 B1**
(45) Date de publication et mention de la délivrance du brevet: **26.09.2012**
(21) Numéro de dépôt: 00400176.4
(22) Date de dépôt: 24.01.2000
(51) Int. Cl.: G02B 6/44

(54) **Organiseur de fibres optiques**
Verteiler für optische Fasern
Optical fibre organiser

(30) Priorité: 04.02.1999 FR 9901294
(43) Date de publication de la demande: 09.08.2000
(73) Titulaire: Nexans, 75008 Paris (FR)
(72) Inventeur: Milanowski, Michel, 60540 Anserville (FR); Vincent, Alain, 77230 Juilly (FR)
(74) Mandataire: Feray, Valérie

(56) Documents cités:
- EP-A- 0 550 327
- GB-A- 2 300 488
- GB-A- 2 325 531
- US-A- 5 402 515

## Description

La présente invention se rapporte aux systèmes de connexion/interconnexion entre fibres optiques d'un câble principal et de câbles de distribution. Elle porte plus particulièrement sur un ensemble modulaire appelé organiseur pour de tels systèmes, qui est du type comportant un support de logement et des cassettes superposables de lovage de fibres et de maintien d'épissures, logées dans ledit support et pivotantes individuellement dans ce support.

Les documents US-A-5 402 515 et US-A-5 655 044 divulguent un organiseur de ce type, dans lequel les cassettes sont pivotantes chacune autour d'un axe solidaire du support, entre une position d'ouverture partiellement hors dudit support et une position de fermeture complètement dans le support, et dans lequel l'axe de pivotement des cassettes est prévu relativement proche d'un passage d'entrée de fibres dans chacune d'elles. Une distance faible entre cet axe de pivotement et ce passage d'entrée permet de limiter les contraintes sur les fibres qui sont dues à la surlongueur à gérer entre les positions d'ouverture et de fermeture de chacune des cassettes. Ceci ne permet cependant pas d'éliminer ces contraintes de manière totalement fiable.

Dans le document US-A-5 655 044, le support a une face intérieure arrière de guidage de fibres vers les différentes cassettes voulues de l'organiseur. L'accès à cette face de guidage nécessite la mise de toutes les cassettes en position d'ouverture et reste peu commode. GB 2 325 531 A divulgue un organiseur de fibres optiques dans lequel les cassettes sont pivotantes.

La présente invention a pour but d'éviter les contraintes sur les fibres lors des manipulations des cassettes entre leur position d'ouverture et leur position de fermeture.

Elle a pour objet un organiseur de fibres optiques selon la revendication 1

Cet organiseur présente avantageusement au moins l'une des caractéristiques additionnelles suivantes :
- Chaque cassette dans ladite position fermée est intérieure audit support et a son passage d'entrée situé sur une face avant ouverte dudit support et à proximité d'un coin avant de ladite cassette, tandis que l'un desdits bras porteurs flexibles prolonge extérieurement le passage d'entrée de la cassette, est rabattable contre ledit coin avant de ladite cassette en position fermée et est muni d'une patte terminale de fixation à un axe de fixation sur ledit support.
- lesdites cassettes comportent chacune une lumière traversante de guidage de forme oblongue et arquée, prévue le long du coin avant de la cassette, ayant une première extrémité contiguë au passage d'entrée de la cassette et une deuxième extrémité sensiblement contiguë audit axe de fixation quand ladite cassette est en position fermée, et ledit support porte un axe de guidage parallèle à l'axe de fixation et prisonnier dans les lumières de guidage desdites cassettes, pour le guidage de chacune des cassettes au cours de son pivotement.
- ledit support est en forme de boîtier ouvert au moins sur ladite face dite avant et au moins partiellement latéralement de part et d'autre de celle-ci et comporte deux premières parois opposées et parallèles aux dites cassettes, une paroi latérale et une série de moyens d'accrochage sur ladite paroi latérale pour le maintien des différents bras porteurs flexibles prévus pour lesdites cassettes, lesdits moyens d'accrochage étant parallèles aux dites cassettes dans ledit support et définissant transversalement ledit axe de fixation desdites cassettes.

- ledit organiseur comporte un ensemble d'épanouissement de fibres, monté extérieurement contre au moins ladite paroi latérale en définissant ladite zone de distribution de fibres sur ledit support et pourvu d'une série de canaux d'épanouissement et de sorties dites avant étagées le long dudit axe de fixation.
- ledit ensemble d'épanouissement comporte au moins un dispositif modulaire d'épanouissement, comportant au moins une entrée arrière d'amarrage de fibres sous tube, opposée aux sorties des canaux d'épanouissement et associée à un cavalier d'amarrage, ledit cavalier d'amarrage étant lui-même de préférence en forme de peigne à plusieurs canaux d'amarrage chacun susceptible de recevoir et fixer au moins un tube de fibres dans ladite entrée d'amarrage.
- ledit dispositif d'épanouissement comporte une partie intermédiaire munie de rebords sécables, définissant des sorties supplémentaires latérales vers un autre organiseur analogue.

L'ensemble d'épanouissement extérieur au support facilite la mise en oeuvre. Il permet de gérer les fibres d'un câble principal d'arrivée, pour les distribuer vers les différentes cassettes ou un autre organiseur, et de gérer au fur et à mesure des besoins les fibres de câbles de distribution pour les distribuer vers les cassettes et les raccorder aux fibres du câble principal dans les cassettes, par des épissures maintenues dans celles-ci.

L'organiseur résultant est de réalisation compacte en intégrant les fonctions d'épanouissement des fibres, de protection de fibres nues sans avoir à les retuber, et de raccordement par des épissures.

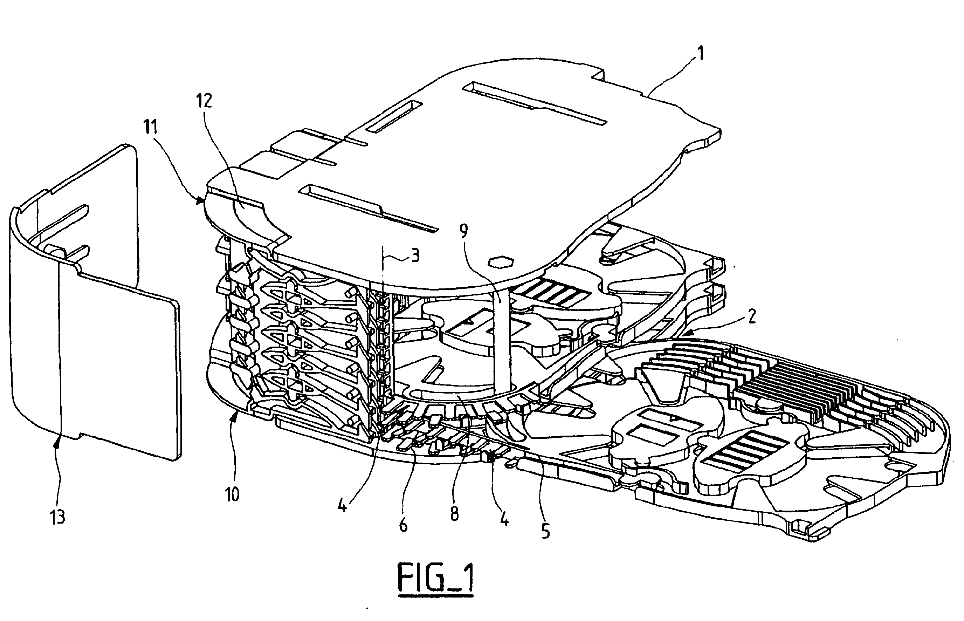

Les caractéristiques et avantages de l'invention ressortiront de la description faite ci-après d'un mode de réalisation donné à titre d'exemple dans les dessins annexés. Dans ces dessins :
- Le figure 1 est une vue en perspective partiellement éclatée de l'organiseur selon l'invention ;
- Les figures 2 et 3 sont des vues en perspective d'une cassette de l'organiseur de la figure 1, pour une position dite ouverte et une position dite fermée de la cassette ;
- Les figures 4 et 5 sont deux vues en perspective, données sous deux angles différents, d'un dispositif d'épanouissement de l'organiseur précité avec un couvercle associé à ce dispositif ;
- Les figures 6 et 7 sont deux vues en perspective recto et verso d'un support de logement desdites cassettes dudit organiseur;
- Les figures 8 et 9 sont deux vues en coupe de l'organiseur de la figure 1, avec ses cassettes en position fermée et avec l'une de ses cassettes en position ouverte et les autres en position fermée ;
- La figure 10 est une vue en coupe d'une variante de réalisation de l'organiseur, montrant cet organiseur partiellement équipé et un mode préféré de verrouillage/déverrouillage des cassettes en position fermée.

En se référant aux différentes figures et plus particulièrement à la figure 1, il ressort que l'organiseur selon l'invention comporte un support 1, en forme de boîtier partiellement ouvert, et des cassettes plates 2 superposées les unes sur les autres dans ledit support en étant pivotantes chacune dans le support et fixées à un axe de fixation 3 solidaire du support. Le pivotement permet de mettre chaque cassette dans une position fermée, dans laquelle la cassette est complètement dans le support, et une position ouverte, dans laquelle la cassette est au moins partiellement hors du support.

Cet axe de fixation 3 est vertical pour les cassettes disposées horizontalement dans le support lui-même considéré horizontal. Il pourrait en être différemment, en particulier l'axe de fixation 3 peut être horizontal et les cassettes alors verticales comme le support.

Cet organiseur comporte pour chacune des cassettes un élément flexible 4 d'acheminement de fibres jusque la cassette et simultanément de solidarisation de ladite cassette à l'axe de fixation, en définissant un bras flexible de pivotement de la cassette.

Cet élément individuel prévu pour chaque cassette appartient à la cassette. Il prolonge extérieurement un passage d'entrée de fibres 5, prévu sur le bord périphérique de la cassette et à proximité d'un coin avant de celle-ci. Ce bras part de l'extrémité de l'un des bords latéraux du passage d'entrée, est par ailleurs indépendant de la cassette et vient se fixer sur le support 1. Il est plié et rabattu contre la cassette quand celle-ci est en position fermée et se déplie avec la mise de la cassette en position ouverte. Ce bras présente des ailettes 6 solidaires de ses deux bords longitudinaux et saillantes d'un même côté, pour la rétention des fibres qu'il achemine jusqu'au passage d'entrée de la cassette. Il définit un chemin invariant en longueur de guidage de fibres et ainsi permet d'éviter totalement, sinon quasi totalement, toute contrainte sur les fibres ainsi acheminées, au cours du pivotement de la cassette. Il assure aussi une protection des fibres acheminées, qui sont avantageusement des fibres nues. Les ailettes 6 sont de préférence alternées d'un bord à l'autre du bras, pour faciliter l'insertion de fibres dans le chemin ainsi défini.

Dans un exemple utile à la compréhension de l'invention le bras flexible 4 peut être solidarisé à la cassette au lieu de faire partie intégrante de celle-ci.

Ces cassettes 2 comportent chacune une lumière traversante 8 de guidage au cours du pivotement de la cassette, qui reçoit un axe de guidage 9 solidaire du support et parallèle à l'axe de fixation. Cette lumière est de forme oblongue et arquée et a l'une de ses extrémités fermée qui est contiguë au passage d'entrée 5 de la cassette et son autre extrémité fermée qui est quant à elle sensiblement contiguë à l'axe de fixation quand la cassette est en position fermée. Elle est formée sensiblement le long du coin avant prévu arqué de la cassette, contre lequel se rabat le bras 4. L'axe de guidage 9 est prisonnier dans les lumières de guidage des différentes cassettes, pour le déplacement relatif de cet axe le long de la lumière de la cassette entraînée entre ses positions fermée et ouverte.

L'organiseur comporte en outre un ensemble 10 d'épanouissement de fibres, monté extérieurement sur le support 1 et aboutissant le long de l'axe de fixation. Cet ensemble 10 est montré constitué de deux dispositifs d'épanouissement 11, qui sont superposés l'un sur l'autre et retenus sur le support 1. Il peut bien entendu ne comporter qu'un seul dispositif 11, si celui-ci est suffisant pour la totalité des fibres reçues par cet organiseur.

L'ensemble d'épanouissement permet la distribution étagée le long de l'axe de fixation 3 de fibres nues pour leur acheminement direct par les bras flexibles 4 dans les différentes cassettes de l'organiseur. Il permet aussi l'amarrage de groupes de fibres provenant de câbles et alors sous gaine ou tube de protection, cet amarrage étant réalisé sur la partie terminale arrière du dispositif, non visible dans la figure 1 mais précisée ci-après. Il permet également la distribution de fibres nues vers d'autres organiseurs, à travers des parois latérales 12 prévues à casser de chaque dispositif d'épanouissement 11.

Un couvercle 13 encliquetable sur l'ensemble d'épanouissement 10 assure la protection de fibres nues dans celui-ci.

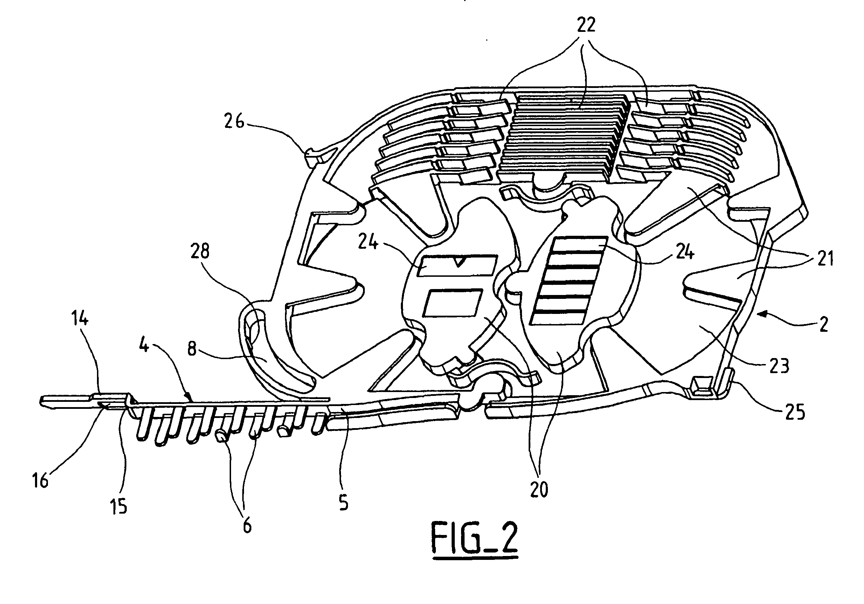

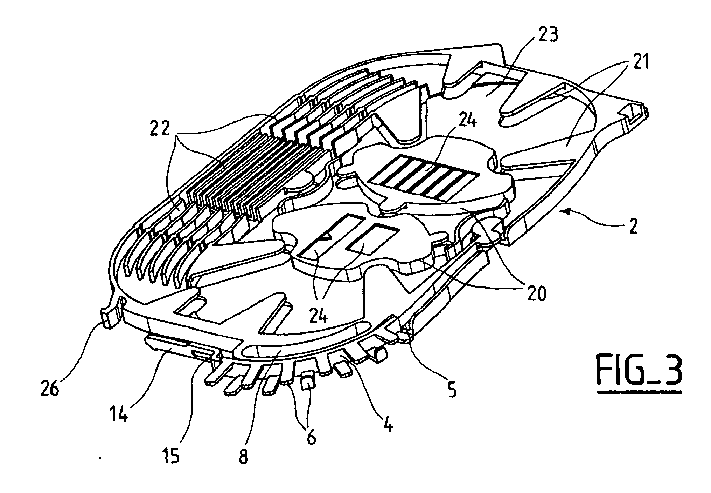

Les figures 2 et 3 montrent l'une des cassettes, considérée en position ouverte et en position fermée, respectivement. Elles font apparaître que le bras flexible 4 présente une patte terminale 14 de fixation sur le support des cassettes. Cette patte de fixation est rectiligne et se rabat à l'arrière du coin avant le long duquel est formée la lumière 8. Un double pliage 15 entre la patte de fixation et la partie d'acheminement proprement dit des fibres sert de butée contre l'axe de fixation, en fin d'insertion de cette patte de fixation dans le support de cassettes . Une légère surépaisseur 16 sensiblement axiale sur la partie de cette patte attenante au pliage 15 assure le maintien en place de la patte de fixation dans des dispositions complémentaires prévues sur le support.

Les ailettes 6 ne sont prévues que sur la seule partie du bras 4 affectée à l'acheminement des fibres jusqu'au passage d'entrée 5. Au moins certaines de ces ailettes ont une partie terminale repliée en regard du bras, pour retenir et protéger les fibres et délimiter leur chemin de guidage. On note aussi que le passage d'entrée 5 et le chemin de guidage défini sur le bras 4 sont avantageusement communs à toutes les fibres nues reçues dans la cassette.

Ainsi qu'illustré dans ces figures, la cassette 2 comporte des moyens de lovage 20 des fibres qu'elle reçoit, des moyens de retenue 21 des fibres lovées et des moyens de maintien 22 d'épissures entre fibres. Ces différents moyens sont en tant que tels relativement classiques. Ainsi les moyens de lovage 21 sont dans cette réalisation constitués par deux tambours à parties périphériques semi-circulaires qui permettent de lover des fibres dans les espaces libres tels que 23, laissés en creux et communiquant entre eux et avec le passage d'entrée. Les moyens de rétention 21 des fibres lovées sont des pattes plates portées par les bords périphériques de la cassette et/ou les moyens 20 et 22, qui s'étendent en regard de ces espaces de lovage 23. Les moyens 22 de maintien d'épissures sont constitués par des jeux de nervures entre lesquelles se coincent les épissures. Ils sont avantageusement adaptés à des épissures de différents types. Ils sont fixes sur la cassette ou peuvent être agrafables sur celle-ci. Ils sont de préférence situés dans une partie arrière de la cassette et sont accessibles quand la cassette est en position ouverte. Des emplacements d'étiquetage tels que 24 sont définis sur les tambours de lovage 20.

La cassette comporte un doigt 25 saillant latéralement sur le coin avant opposé à la lumière 8 et au bras 4. Ce doigt 25 est d'épaisseur moindre que celle de la cassette, pour sa sélection et sa préhension quand les cassettes sont superposées. Il permet de venir actionner la cassette voulue parmi les cassettes superposées, pour la mise de cette cassette en position ouverte.

Une patte élastique arrière d'encliquetage 26 est prévue, sensiblement sur le coin arrière qui est diamétralement opposé au doigt 25 de la cassette, pour le verrouillage de la cassette en position fermée dans le support. Un léger bossage 28 sur au moins l'un des bords de la partie terminale arrière de la lumière 8 assure le verrouillage de la cassette en position ouverte.

Cette cassette, les différentes dispositions prévues sur celle-ci et son bras flexible 4 sont réalisés en matière plastique et sont moulés.

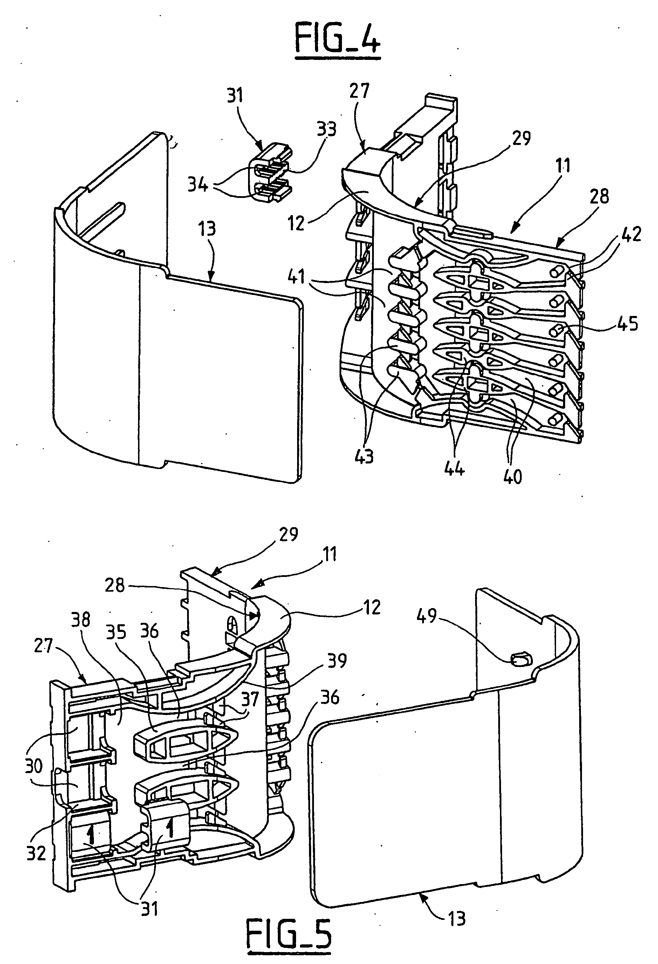

Les figures 4 et 5 montrent que le dispositif d'épanouissement 11 est de forme allongée et arquée, adaptée au contour des parois et du coin du support qui le reçoivent et que le couvercle de protection 13 est de forme analogue.

Le dispositif d'épanouissement 11 est relativement plat et rigide et de préférence réalisé en matière plastique et moulé. Sa face concave intérieure est lisse. Sa face extérieure convexe présente différentes séries de nervures, de forme adaptée à leur fonction, dont un mode de réalisation est décrit en regard de ces figures 4 et 5.

Une partie arrière 27 est agencée pour assurer l'entrée et l'amarrage de fibres d'un câble principal d'arrivée et/ou de câbles de distribution et pour réaliser un possible premier épanouissement de ces fibres. Les fibres de ces câbles précités sont sous tube ou gaine de protection et ainsi amarrées et sont laissées nues aussitôt après cet amarrage. Une partie avant opposée 28 est agencée pour l'épanouissement proprement dit des fibres nues vers les différentes cassettes. Une partie intermédiaire 29 assure le couplage entre les parties arrière et avant 27 et 28 et permet la sortie latérale supplémentaire d'un côté et/ou de l'autre vers d'autres organiseurs identiques.

La partie terminale de la partie arrière 27 comporte des entrées 30 et un cavalier complémentaire d'amarrage 31 associé à chaque entrée. Chaque entrée est délimitée entre deux nervures droites et relativement courtes 32 et est relativement large. Le cavalier 31 est subdivisé intérieurement par une ou en variante des dents 33, pour constituer un peigne à plusieurs canaux parallèles d'amarrage 34. Ces canaux sont susceptibles de recevoir et retenir chacun un ou deux tubes contenant des fibres, qui sont alors retenus superposés dans le canal Dans l'exemple illustré, le peigne comporte deux canaux pour pouvoir recevoir deux gros tubes de fibres dites d'entrée. Il peut en variante comporter trois canaux pour une capacité totale de six petits tubes, retenus deux à deux superposés dans chaque canal. Les dents sont striées pour une bonne rétention des tubes. Le cavalier est quant à lui encliquetable dans l'entrée pour son maintien et son retrait possible.

En variante, une seule entrée 30 peut être prévue, centrée sur la hauteur de la partie terminale arrière. Bien entendu, chaque entrée sur cette partie terminale peut être subdivisée et son cavalier d'amarrage non subdivisé intérieurement.

Une première série de nervures 35, relativement larges, renflées et creuses, délimitent un nombre restreint de canaux de guidage 36 pour le premier guidage et/ou épanouissement des fibres alors nues reçues de l'extrémité d'entrée. Des ailettes 37 portées par ces nervures assurent la retenue des fibres dans ces canaux. Un petit intervalle en biais entre les ailettes en vis à vis, ou en variante une disposition des ailettes pour qu'elles ne soient pas deux à deux en vis à vis dans les canaux, permet l'insertion aisée des fibres dans ces canaux. Les fibres sont laissées nues dans un espace libre 38 prévu entre l'entrée 30 et ces canaux 36.

Dans cet exemple de réalisation, trois canaux 36 étagés sur toute la hauteur de la partie terminale arrière 27 ont été prévus en correspondance avec les trois entrées 30, mais peuvent tout aussi bien correspondre à une entrée unique 30.

La partie avant 28 d'épanouissement proprement dit est divisée en canaux plus étroits d'épanouissement 40 répartis sur sa hauteur, ayant des entrées de guidage 41 et des sorties subdivisées 42. Les entrées de guidage sont délimitées par des nervures relativement courtes 43. Les canaux d'épanouissement sont délimités par des nervures relativement longues et étroites et plus ou moins renflées 44. Les sorties 42 sont définies par des pions 45 dans la partie terminale avant des canaux. Des ailettes non référencées sont prévues sur les nervures, pour permettre d'insérer et pour retenir les fibres dans les entrées de guidage, les canaux d'épanouissement et les sorties subdivisées. Avantageusement, ces sorties 42 sont au nombre et au pas des cassettes possibles dans le support et au même niveau que celles-ci.

Dans la réalisation illustrée, le dispositif d'épanouissement comporte six canaux d'épanouissement 40 et un pion 45 par canal, pour définir ainsi douze sorties étagées 42 pour douze cassettes possibles dans le support.

La partie intermédiaire 29 est lisse et arquée pour correspondre au coin arrière du support. Les parois précitées 12 à casser pour définir les sorties vers d'autres organiseurs sont les rebords aisément sécables de cette partie intermédiaire. On note à cet égard que les nervures latérales en particulier de la partie avant aboutissent à ces parois à casser en formant une transition arquée 39 de guidage de fibres vers les sorties latérales quand les parois 12 sont effectivement cassées.

Des moyens de guidage et de retenue en place sur le support sont prévus sur le dispositif d'épanouissement, sous forme de pattes latérales de guidage sur les bords de sa partie avant, d'épaulements de détrompage et de butée sur les bords de sa partie arrière et entre les bords de ses différentes parties, et de butées terminales arrière.

Le couvercle 13 se présente quant à lui sous la forme d'une simple plaque arquée, réalisée de préférence en matière plastique, qui comporte des doigts de positionnement et de retenue tels que 49 sur sa face intérieure concave. Ces doigts sont reçus et bloqués entre des nervures et/ou dans les trous de forme appropriée de certaines nervures creuses du dispositif d'épanouissement ainsi protégé.

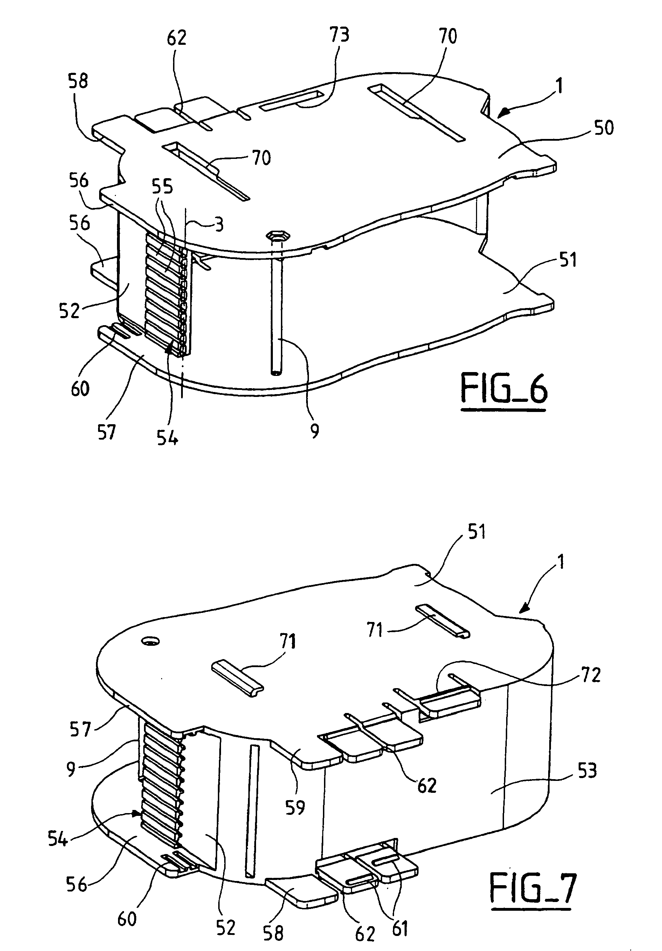

Dans les figures 6 et 7 illustrant le support 1, on a désigné par 50 et 51 les parois opposées et parallèles aux cassettes et dites parois supérieure et inférieure, par 52 sa paroi latérale définissant l'axe de fixation 3 le long de son extrémité la plus avant et par 53 sa paroi arrière. Ce support est ouvert en face avant et au moins partiellement latéralement de part et d'autre de celle-ci.

Ces figures 6 et 7 font apparaître que la paroi latérale 52 porte une série de moyens d'accrochage 54 des bras des cassettes pour la fixation des bras et le pivotement des cassettes dans le support. Ces moyens sont constitués par une série de rainures parallèles qui s'étendent depuis l'extrémité avant de la paroi vers l'arrière et sont au pas des cassettes superposées. Ces rainures sont définies entre des nervures 55, de section en T. Ces nervures sont prévues sur la face extérieure de la paroi et sur une partie de sa longueur.

L'axe de fixation 3 est défini sur l'entrée de ces rainures d'accrochage 54.

L'axe de guidage 9 est une tige cylindrique montée entre les parois supérieure et inférieure et retenue sur celles-ci. Il est situé à l'avant de l'axe 3.

Les parois 50 et 51 présentent chacune un coin arrondi, s'étendant sensiblement entre les deux axes 3 et 9, et sont saillantes chacune sur la paroi latérale 52 en définissant deux excroissances latérales 56 et 57 qui sont en continuité avec le coin arrondi avant de chacune d'elles. Elles présentent également des excroissances arrière 58 et 59, saillantes extérieurement sur la paroi arrière 53, tout au moins le long de la partie terminale de celle-ci située du côté de la paroi latérale 52. Ces excroissances 56 à 59 sont interrompues sur la longueur du coin arrière défini entre les parois latérale 52 et arrière 53. Elles assurent le guidage et le maintien en place du ou des dispositifs d'épanouissement. Elles sont équipées à cet effet de moyens de guidage tels que des rainures 60 sur la partie la plus arrière des excroissances latérales et des nervures 61 sur au moins l'une des excroissances arrière.

Les excroissances arrière sont avantageusement divisées en lamelles en vis à vis, par des fentes 62 dans chacune d'elles, pour leur conférer une légère flexibilité et définir des butées de positionnement et maintien de chaque dispositif d'épanouissement entre ces lamelles.

Le support 1 présente par ailleurs des glissières complémentaires 70 et 71 sur ses parois 50 et 51, pour la superposition possible de plusieurs organiseurs. Ces glissières sont des nervures parallèles sur l'une de ces parois et des lumières ou rainures sur l'autre paroi, qui sont transversales à la face avant du support. Une nervure supplémentaire arrière 72 et une rainure supplémentaire arrière 73 sont prévues sur ces mêmes parois 50 et 51 et sont parallèles à la face avant, pour définir une position de verrouillage de deux supports ou des organiseurs superposés.

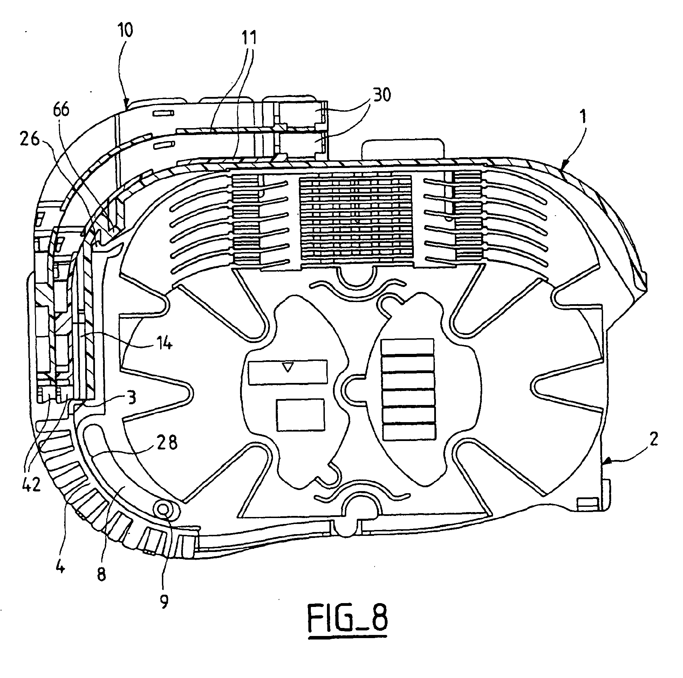

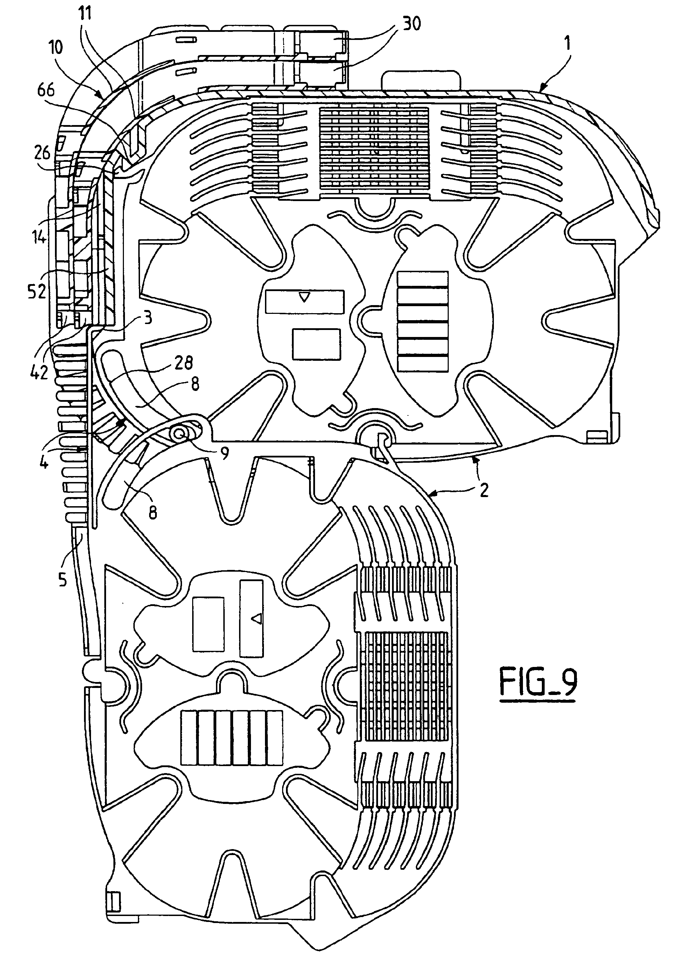

Les figures 8 et 9 permettent de compléter la description de l'organiseur et font ressortir ses avantages.

Elles montrent les deux positions ouverte et fermée que peuvent prendre chacune des cassettes 2 dans le support 1, ainsi que le verrouillage de la cassette dans l'une et l'autre de ses deux positions. Le verrouillage en position fermée est obtenu par encliquetage de la patte arrière 26 de la cassette sur une arête intérieure 66 prévue sur la hauteur du coin arrière entre les parois latérale 52 et arrière 53 du support. Le verrouillage en position ouverte est quant à lui assuré par le bossage 28 prévu sur la partie terminale arrière de la lumière 8 et l'axe de guidage 9 situé à l'arrière de ce bossage jouant alors le rôle de butée de maintien de l'axe dans la partie terminale de la lumière 8.

Elles font apparaître clairement la solidarisation de chaque cassette 2 au support 1 qui est réalisée à l'aide du bras 4, pour le pivotement de la cassette en déployant ce bras flexible fixé sur l'extrémité avant de la paroi latérale 52, et pour simultanément le guidage de fibres entre l'ensemble d'épanouissement 10 et le passage d'entrée 5 de la cassette, en définissant le chemin invariant de fibres quelle que soit la position de la cassette. Ce chemin invariant en longueur évite toute surlongueur de fibre lors du pivotement de la cassette. Il fait que les fibres ne sont soumises à aucune contrainte lors des manipulations de la cassette ou de l'une quelconque des cassettes de l'organiseur.

Elles montrent aussi que l'organiseur est avantageusement équipé de deux dispositifs 11 d'épanouissement de fibres qui sont superposés l'un sur l'autre et dont les sorties de l'un et l'autre sont en regard des bras 4 des différentes cassettes dans le support 1. Ces deux étages superposés d'épanouissement avec des sorties individuelles par cassette permettent une gestion séparée des fibres d'un câble principal d'arrivée et des fibres de câbles de distribution. Ils permettent ainsi l'épanouissement initial, dit figé, des fibres du câble d'arrivée vers les différentes cassettes dans le dispositif d'épanouissement le plus intérieur des deux et l'épanouissement au fur et à mesure des besoins des fibres de câbles de distribution dans le dispositif d'épanouissement le plus extérieur. Ces deux dispositifs d'épanouissement sont substantiellement identiques pour leur superposition.

On note à nouveau qu'en présence d'un tube de fibres de grosse capacité qui provient d'un câble principal d'arrivée et est amarré dans l'une des entrées 30 ou la seule entrée 30 du dispositif d'épanouissement intérieur, il est possible de sortir et guider latéralement certaines des fibres dans le dispositif d'épanouissement correspondant d'un autre organiseur.

La première mise en oeuvre du dispositif d'épanouissement peut être faite en dehors du support 1 de cassettes, pour une plus grande facilité. Après sa mise en place sur le support, la distribution des fibres de câbles de distribution supplémentaires peut être assurée tant que l'organiseur n'est pas complet.

Avantageusement, cet organiseur est conçu pour gérer les fibres du câble d'arrivée et au fur et à mesure des besoins celles de câbles de distribution. En particulier, les cassettes indépendantes permettent le raccordement de fibres du câble d'arrivée aux fibres de câbles de distribution, par des épissures maintenues dans ces cassettes, et permettent aussi le lovage de fibres du câble d'arrivée qui sont en attente d'épissurage et sont alors coupées ou non.

Lorsque les fibres lovées sont non coupées, celles-ci ressortent des cassettes concernées par le passage d'entrée puis par le bras de guidage de chacune d'elles. Elles sont alors reçues et guidées dans les canaux d'épanouissement jusqu'à l'entrée d'amarrage. Dans ces conditions, le cavalier d'amarrage est un peigne à deux canaux, l'un retenant les fibres entrantes et l'autre les fibres lovées et non coupées sortantes. Ces fibres entrantes et sortantes sont contenues dans le tube initial sectionné et ainsi retenues dans les deux canaux du peigne.

La présente invention décrite en regard de l'exemple de réalisation illustré dans les figures 1 à 9 peut bien entendu être adaptée sans sortir du cadre de cette invention, en remplaçant certains des moyens utilisés dans cet exemple par d'autres moyens fonctionnellement équivalents.

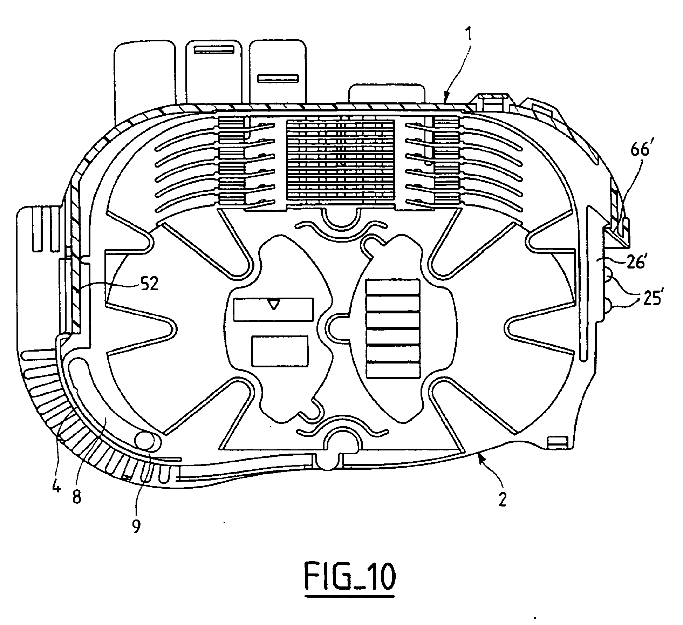

Ainsi la figure 10, comparable à la figure 9, montre l'organiseur qui est sans son ensemble d'épanouissement de fibres mais dans lequel les moyens de verrouillage/déverrouillage de chaque cassette en position fermée ont été adaptés. Ces moyens sont constitués comme dans la figure 8 par une patte élastique d'encliquetage 26' prévue sur la cassette 2 et par une arête saillante intérieurement 66' prévue sur le support 1, mais sont disposés différemment pour faciliter leur déverrouillage.

La patte 26' est de forme allongée, est solidaire par l'une de ses extrémités de l'autre coin avant de la cassette à l'opposé de la lumière 8 et s'étend librement le long du bord latéral de la cassette vers l'arrière, en laissant un jeu entre elle et la cassette proprement dite. Sa partie de couplage à la cassette est d'épaisseur moindre et rendue aisément flexible.

L'arête 66' de rétention de cette patte 26' est terminale sur l'autre face latérale du support 1, qui est opposée à la face 52, est très largement tronquée et forme l'autre coin arrière de ce support. Cet autre coin arrière est renforcé par des nervures de tenue mécanique.

Des doigts 25' saillants extérieurement sur la patte 26' permettent la sélection de la cassette et l'actionnement aisé de sa patte 26', pour le déverrouillage de cette patte de l'arête de rétention 66' par une simple pression exercée sur la cassette ou plus précisément sur sa patte d'enquicletage 26'.

## Revendications

1. Organiseur de fibres optiques, comportant des cassettes plates (2) superposables de lovage de fibres et de maintien d'épissures, un support (1) de logement desdites cassettes, des moyens de maintien et de pivotement de chaque cassette entre une position fermée et une position ouverte relativement audit support, et des moyens individuels flexibles d'acheminement de fibres entre une zone de distribution de fibres sur ledit support et un passage d'entrée (5) de chaque cassette, dans lequel lesdits moyens de maintien et de pivotement de chaque cassette et le moyen d'acheminement de fibres entre ladite zone de distribution sur ledit support et le passage d'entrée de la cassette sont constitués par un bras porteur flexible (4) faisant partie intégrante de la casette et équipé en chemin de rétention et de protection de fibres, reliant le passage d'entrée (5) de ladite cassette (2) et la zone de distribution dudit support (1) et étant rabattable contre ladite cassette et dépliable relativement à celle-ci, pour le pivotement de la cassette dans son plan en définissant simultanément un chemin invariant en longueur de guidage de fibres de l'une à l'autre desdites positions fermée et ouverte de ladite cassette, **caractérisé en ce que** ledit bras faisant partie intégrante de la casette et (4) est solidaire d'un bord latéral du passage d'entrée (5) de la cassette et présente une série d'ailettes (6), solidaires de ses bords et saillantes d'un même côté, pour définir ledit chemin de rétention et de protection de fibres débouchant dans ledit passage d'entrée (5) de la cassette (2).

2. Organiseur selon la revendication 1, **caractérisé en ce que** chaque cassette dans ladite position fermée est à l'intérieur dudit support et présente son passage d'entrée situé sur une face avant ouverte dudit support et à proximité d'un coin avant de ladite cassette et dans ladite position ouverte est au moins partiellement hors dudit support, et **en ce que** ledit bras (4) prolonge extérieurement ledit passage d'entrée (5) de la cassette (2), au delà dudit coin avant de celle-ci est rabattable contre ledit coin dit avant de ladite cassette en position fermée et est muni d'une patte terminale (14) de fixation à un axe de fixation (3), formé sur ledit support, à une extrémité de ladite zone de distribution sur ledit support.

3. Organiseur selon la revendication 2, **caractérisé en ce que** lesdites cassettes comportent chacune une lumière traversante de guidage (8), de forme oblongue et arquée, prévue le long dudit coin avant de la cassette, ayant une première extrémité contiguë au passage d'entrée (5) de la cassette (2) et une deuxième extrémité sensiblement contiguë audit axe de fixation (3) quand ladite cassette est en position fermée, et **en ce que** ledit support (1) porte un axe de guidage (9) parallèle à l'axe de fixation (3) et prisonnier dans les lumières de guidage (8) desdites cassettes (2), pour le guidage de chacune des cassettes au cours de son pivotement.

4. Organiseur selon l'une des revendications 2 à 3, **caractérisé en ce que** ledit support (1) est en forme de boîtier ouvert au moins sur ladite face avant et au moins partiellement latéralement de part et d'autre de celle-ci et comportant deux premières parois (50,51) opposées et parallèles aux dites cassettes, une paroi latérale (52) et une série de moyens d'accrochage (54) sur ladite paroi latérale pour le maintien des différents bras (4) prévus pour lesdites cassettes (2), lesdits moyens d'accrochage étant parallèles aux dites cassettes (2) dans ledit support (1) et définissant transversalement ledit axe de fixation (3) desdites cassettes.

5. Organiseur selon la revendication 4, **caractérisé en ce que** ladite série de moyens d'accrochage (54) est constituée par une série de rainures, dont les extrémités situées du côté de la face avant du support et dites extrémités avant définissent entre elles ledit axe de fixation (3).

6. Organiseur selon la revendication 5, **caractérisé en ce que** lesdites rainures sont délimitées entre des nervures (55) de section en T.

7. Organiseur selon la revendication 6 **caractérisé en ce que** lesdites nervures (55) sont situées sur la face extérieure de ladite paroi latérale (52).

8. Organiseur selon l'une des revendications 4 à 7, **caractérisé en ce qu'**il comporte un ensemble (10) d'épanouissement de fibres, monté extérieurement contre au moins ladite paroi latérale (52) en définissant ladite de zone de distribution de fibres et pourvu d'une série de canaux d'épanouissement (40) et de sorties dites avant (42) étagées le long dudit axe de fixation (3).

9. Organiseur selon la revendication 8, **caractérisé en ce que** ledit ensemble (10) d'épanouissement comporte au moins un dispositif modulaire (11) d'épanouissement.

10. Organiseur selon la revendication 9, **caractérisé en ce que** ledit dispositif d'épanouissement (11) comporte au moins une entrée arrière (30) d'amarrage de fibres sous tube de protection, située sur une extrémité arrière opposée aux sorties (42) desdits canaux d'épanouissement (40), et un cavalier d'amarrage (31) associé et complémentaire de chaque entrée arrière d'amarrage.

11. Organiseur selon la revendication 10, **caractérisé en ce que** ledit cavalier d'amarrage (31) est en forme de peigne à plusieurs canaux d'amarrage (34), chacun susceptible de recevoir et fixer au moins un tube contenant des fibres.

12. Organiseur selon l'une des revendications 10 et 11, **caractérisé en ce qu'**il comporte une série de canaux de guidage (36) délimités par des premières nervures (35) et situés à la suite de chaque entrée d'amarrage (34) sur la partie terminale arrière correspondante (27) du dispositif d'épanouissement, pour recevoir et réaliser un pré-épanouissement possible de fibres laissées nues.

13. Organiseur selon la revendication 12, **caractérisé en ce que** lesdits canaux d'épanouissement (40) s'étendent sur une partie terminale avant (28) dudit dispositif, lesdites parties terminales avant et arrière (27,28) étant séparées par une partie intermédiaire (29) lisse de couplage.

14. Organiseur selon la revendication 13, **caractérisé en ce que** ladite partie intermédiaire (29) est munie de rebords latéraux sécables (12), définissant chacun une sortie latérale supplémentaire vers au moins un autre organiseur analogue.

15. Organiseur selon l'une des revendications 9 à 14, **caractérisé en ce que** lesdits canaux d'épanouissement (40) sont délimités par au moins une deuxième série de nervures (44) et lesdites sorties avant (42) par au moins un pion (45), subdivisant desdits canaux d'épanouissement (40).

16. Organiseur selon la revendication 15, **caractérisé en ce que** lesdites sorties avant (42) sont au pas desdites cassettes (2) dans ledit support (1).

17. Organiseur selon l'une des revendications 9 à 16, **caractérisé en ce qu'**il comporte un couvercle (13), encliquetable sur ledit ensemble d'épanouissement (10).

18. Organiseur selon la revendication 17, caractérisé en ce ledit ensemble d'épanouissement (10) est constitué de deux dispositifs d'épanouissement (10) superposés l'un sur l'autre.

19. Organiseur selon la revendication 18, **caractérisé en ce que** chaque dispositif d'épanouissement (10) est de forme arquée et s'étend le long de ladite paroi latérale (52), le long d'une partie d'une paroi dite arrière (53) dudit support et le long d'un coin arrière de forme arquée entre lesdites parois latérale et arrière.

20. Organiseur selon la revendication 9, **caractérisé en ce que** ledit support (1) présente des moyens de maintien (56-59) dudit ensemble d'épanouissement (10), comportant des excroissances opposées, définies par lesdites premières parois opposées (50,51) dudit support et saillantes extérieurement sur au moins ladite paroi latérale (52) de celui-ci, entre lesquelles est reçu et maintenu ledit ensemble d'épanouissement.

21. Organiseur selon la revendication 3, **caractérisé en ce que** ledit support (1) et lesdites cassettes (2) sont équipés de moyens complémentaires de verrouillage de chaque cassette dans au moins l'une des positions ouverte et fermée, comportant d'une part ledit axe de guidage (9) porté par ledit support et d'autre part par un bossage (28) saillant dans au moins l'une des parties terminales de ladite lumière guidage (8) de la cassette (2).

22. Organiseur selon la revendication 4, **caractérisé en ce que** ledit support (1) comporte une arête saillante intérieurement (66, 66') et chaque cassette (2) comporte une patte élastique d'encliquetage (26, 26') prévue en correspondance avec ladite arête pour le verrouillage de la cassette en position fermée dans ledit support.

23. Organiseur selon la revendication 22, **caractérisé en ce que** lesdites cassettes comportent chacune un doigt (25) de sélection et préhension de la cassette en position fermée dans ledit support (1), saillant sur une partie périphérique accessible de la cassette quand celle-ci est en position fermée dans ledit support, pour l'actionnement de la cassette de sa position fermée à sa position ouverte.

24. Organiseur selon la revendication 22, **caractérisé en ce que** ladite arête (66') est parallèle et sensiblement opposée audit axe de fixation (3) et formée sur une autre face latérale tronquée dudit support (1) et que ladite patte élastique (26') est solidaire par une de ses extrémités d'un autre coin avant de la cassette et s'étend latéralement le long de celle-ci, en ménageant un jeu entre elle et ladite cassette.

25. Organiseur selon la revendication 24, **caractérisé en ce que** ladite patte élastique (26') présente au moins un doigt (25') saillant extérieurement, de sélection de la cassette et d'actionnement de ladite patte élastique contre la cassette pour le deverrouillage de ladite patte élastique et de ladite arête.

26. Organiseur selon la revendication 4, **caractérisé en ce que** ledit support (1) comporte des glissières complémentaires (70-74) sur lesdites premières parois opposées (50,51), pour un montage superposé de tels organiseurs.

## Claims

1. An optical fiber organizer, comprising flat and superposable fiber coiling and splice holding cassettes (2), a support (1) for housing said cassettes, means for holding and pivoting each cassette between a closed position and an open position with respect to said support, and flexible individual means for routing fibers between a fiber distribution area on said support and an inlet aperture (5) of each cassette, wherein said means for holding and pivoting each cassette and the means for routing fibers between said distribution area on said support and the inlet aperture of the cassette consist of a flexible carrier arm (4) which is an integral part of the cassette and fitted on a fiber retention and protection path, connecting the inlet aperture (5) of said cassette (2) and the distribution area of said support (1) and capable of being folded back against said cassette and unfolded in relation thereto, for pivoting the cassette in the plane thereof, thereby simultaneously defining a path of invariable fiber guiding length from one to the other of said closed and open positions of said cassette,
**characterized in that** said arm (4) which is an integral part of the cassette is integral with a side edge of the inlet aperture (5) of the cassette and has a series of fins (6) integral with the edges thereof and protruding from the same side, so as to define said fiber retention and protection path opening into said inlet aperture (5) of the cassette (2).

2. The organizer according to claim 1, **characterized in that** each cassette in said closed position is inside said support and has the inlet aperture thereof located on an open front side of said support and close to a front corner of said cassette and in said open position is at least partially outside said support, and **in that** said arm (4) externally extending said inlet aperture (5) of the cassette (2) beyond said front corner thereof can be folded back against said so-called front corner of said cassette in the closed position and is provided with and end tab (14) for fastening to a fastening axis (3) formed on said support at one end of said distribution area on said support.

3. The organizer according to claim 2, **characterized in that** said cassettes each have an elongated and arcuate guide-through lumen (8) provided along said front corner of the cassette, having a first end adjacent to the inlet aperture (5) of the cassette (2) and a second end substantially adjacent to said fastening axis (3) when said cassette is in the closed position, and **in that** said support (1) carries a guide axis (9) parallel to the fastening axis (3) and captive inside the guide lumens (8) of said cassettes (2) for guiding each of the cassettes during pivoting thereof.

4. The organizer according to any of claims 2 to 3, **characterized in that** said support (1) is formed as an open case on at least said front side and at least partially laterally on either side thereof and having two first walls (50, 51) opposite and parallel to said cassettes, one side wall (52) and a series of hook-up means (54) on said side wall for holding different arms (4) provided for said cassettes (2), said hook-up means being parallel to said cassettes (2) in said support (1) and transversely defining said fastening axis (3) of said cassettes.

5. The organizer according to claim 4, **characterized in that** said series of hook-up means (54) consists of a series of grooves, the ends of which are located on the side of the front side of the support and said front ends together define said fastening axis (3).

6. The organizer according to claim 5, **characterized in that** said grooves are delimited between ribs (55) having a T-shaped cross-section.

7. The organizer according to claim 6, **characterized in that** said ribs (55) are located on the outer side of said side wall (52).

8. The organizer according to any of claims 4 to 7, **characterized in that** it comprises a fiber fan-out assembly (10) externally mounted against at least said side wall (52) thereby defining said fiber distribution area, and provided with a series of fan-out channels (40) and so-called staged outlets (42) along said fastening axis (3).

9. The organizer according to claim 8, **characterized in that** said fan-out assembly (10) comprises at least one modular fan-out device (11).

10. The organizer according to claim 9, **characterized in that** said fan-out device (11) comprises at least one rear inlet (30) for attaching fibers in a protective tube, located at one rear end opposite the outlets (42) of said fan-out channels (40), and an attachment clamp (31) associated with and complementary to each rear attachment inlet.

11. The organizer according to claim 10, **characterized in that** said attachment clamp (31) has the shape of a comb with several attachment channels (34), each capable of receiving and fastening at least one fiber-containing tube.

12. The organizer according to any of claims 10 and 11, **characterized in that** it comprises a series of guide channels (36) delimited by first ribs (35) and located following each attachment inlet (34) on the corresponding rear end portion (27) of the fan-out device, for receiving and performing possible initial fanning-out of bare fibers.

13. The organizer according to claim 12, **characterized in that** said fan-out channels (40) extend on a front end portion (28) of said device, said front and rear end portions (27, 28) being separated by a smooth intermediate coupling portion (29).

14. The organizer according to claim 13, **characterized in that** said intermediate portion (29) is provided with breakable lateral flanges (12) each defining an additional lateral outlet towards at least one other similar organizer.

15. The organizer according to any of claims 9 to 14, **characterized in that** said fan-out channels (40) are delimited by at least one second series of ribs (44) and said front outlets (42) by at least one peg (45) subdividing said fan-out channels (40).

16. The organizer according to claim 15, **characterized in that** said front outlets (42) have the pitch of said cassettes (2) in said support (1).

17. The organizer according to any of claims 9 to 16, **characterized in that** it comprises a cover (13), which can be snapped onto said fan-out assembly (10).

18. The organizer according to claim 17, **characterized in that** said fan-out assembly (10) consists of two fan-out devices (10) superposed upon each other.

19. The organizer according to claim 18, **characterized in that** each fan-out device (10) is arcuate and extends along said side wall (52), along part of a so-called rear wall (53) of said support and along an arcuate rear corner between said side and rear walls.

20. The organizer according to claim 9, **characterized in that** said support (1) has means (56 to 59) for holding said fan-out assembly (10), comprising opposite protuberances defined by said first opposite walls (50, 51) of said support and externally protruding on at least said side wall (52) thereof, said fan-out assembly being received and held there between.

21. The organizer according to claim 3, **characterized in that** said support (1) and said cassettes (2) are fitted with complementary means for locking each cassette in at least one of the open and closed positions, comprising on the one hand said guide axis (9) carried by said support and on the other hand a boss (28) protruding into at least one of the end portions of said guide lumen (8) of the cassette (2).

22. The organizer according to claim 4, **characterized in that** said support (1) comprises an internally protruding edge (66, 66') and each cassette (2) comprises an elastic snap-on tab (26, 26') provided in correspondence with said edge for locking the cassette in the closed position in said support.

23. The organizer according to claim 22, **characterized in that** said cassettes each comprise a finger (25) for selecting and gripping the cassette in the closed position in said support (1), protruding on an accessible peripheral portion of the cassette when the latter is in the closed position inside said support, for actuating the cassette from the closed position thereof into the open position thereof.

24. The organizer according to claim 22, **characterized in that** said edge (66') is parallel and substantially opposite said fastening axis (3) and shaped on the other truncated lateral side of said support (1), and **in that** said elastic tab (26') is integral by one of the ends thereof with another front corner of the cassette and laterally extends along the same, creating play between said corner and said cassette.

25. The organizer according to claim 24, **characterized in that** said elastic tab (26') has at least one finger (25') protruding externally, for selecting the cassette and actuating said elastic tab against the cassette for unlocking said elastic tab and said edge.

26. The organizer according to claim 4, **characterized in that** said support (1) comprises complementary sliders (70 to 74) on said first opposite walls (50, 51) for superposed mounting of such organizers.

## Patentansprüche

1. Lichtleitfaserverteiler, umfassend flache und überlagerbare Kassetten (2) zum Aufwickeln von Fasern und Halten von Spleißungen, einen Aufnahmeträger (1) der Kassetten, Mittel zum Halten und Schwenken jeder Kassette zwischen einer geschlossenen Position und einer offenen Position im Verhältnis zu dem Träger, und flexible individuelle Mittel zum Leiten von Fasern zwischen einem Faserverteilungsbereich auf dem Träger und einem Eintrittsdurchgang (5) jeder Kassette, wobei die Mittel zum Halten und Schwenken jeder Kassette und das Mittel zum Leiten von Fasern zwischen dem Verteilungsbereich auf dem Träger und dem Eintrittsdurchgang der Kassette aus einem flexiblen Trägerarm (4) bestehen, der ein fester Bestandteil der Kassette ist und auf dem Faserhalte- und Schutzweg eingerichtet ist, der den Eintrittsdurchgang (5) der Kassette (2) und den Verteilungsbereich des Trägers (1) verbindet und der gegen die Kassette umgeklappt und im Verhältnis dazu aufgeklappt werden kann, um die Kassette in ihrer Ebene zu verschwenken, wobei gleichzeitig ein Weg definiert wird, der eine unveränderliche Faserleitlänge von der einen in die andere der geschlossenen und offenen Positionen der Kassette aufweist,
**dadurch gekennzeichnet, dass** der Arm (4), der ein fester Bestandteil der Kassette ist, mit einem Seitenrand des Eintrittsdurchgangs (5) der Kassette fest verbunden ist und eine Reihe von Flügeln (6) aufweist, die mit den Rändern derselben fest verbunden sind und von derselben Seite vorstehen, um den Faserhalte- und Schutzweg zu definieren, der in den Eintrittsdurchgang (5) der Kassette (2) einmündet.

2. Verteiler nach Anspruch 1, **dadurch gekennzeichnet, dass** sich jede Kassette in der geschlossenen Position innerhalb des Trägers befindet und einen Eintrittsdurchgang aufweist, der sich auf einer offenen Vorderseite des Trägers und in der Nähe einer vorderen Ecke der Kassette befindet, und sich in der offenen Position mindestens teilweise außerhalb des Trägers befindet, und dass der Arm (4), der den Eintrittsdurchgang (5) der Kassette (2) außen über die vordere Ecke derselben hinweg verlängert, gegen die so genannte vordere Ecke der Kassette in der geschlossenen Position umgeklappt werden kann und mit einer Endlasche (14) zum Befestigen an einer Befestigungsachse (3) versehen ist, die auf dem Träger an einem Ende des Verteilungsbereichs auf dem Träger gebildet ist.

3. Verteiler nach Anspruch 2, **dadurch gekennzeichnet, dass** die Kassetten jeweils ein längliches und bogenförmiges Führungsdurchgangslumen (8) umfassen, das an der vorderen Ecke der Kassette entlang bereitgestellt wird und ein erstes Ende neben dem Eintrittsdurchgang (5) der Kassette (2) und ein zweites Ende im Wesentlichen neben der Befestigungsachse (3) aufweist, wenn sich die Kassette in der geschlossenen Position befindet, und dass der Träger (1) eine Führungsachse (9) trägt, die zur Befestigungsachse (3) parallel ist und in den Führungslumen (8) der Kassetten (2) zum Führen jeder der Kassetten während ihres Schwenkens festgehalten wird.

4. Verteiler nach einem der Ansprüche 2 bis 3, **dadurch gekennzeichnet, dass** der Träger (1) als Gehäuse vorliegt, das mindestens auf der Vorderseite und mindestens teilweise seitlich auf beiden Seiten derselben offen ist und zwei erste Wände (50, 51), die den Kassetten gegenüber und dazu parallel liegen, eine Seitenwand (52) und eine Reihe von Einhängemitteln (54) an der Seitenwand zum Halten von verschiedenen Armen (4), die für die Kassetten (2) bereitgestellt werden, umfasst, wobei die Einhängemittel zu den Kassetten (2) in dem Träger (1) parallel sind und querliegend die Befestigungsachse (3) der Kassetten definieren.

5. Verteiler nach Anspruch 4, **dadurch gekennzeichnet, dass** die Reihe von Einhängemitteln (54) aus einer Reihe von Nuten besteht, deren Enden sich auf der Seite der Vorderseite des Trägers befinden und deren Vorderenden zusammen die Befestigungsachse (3) definieren.

6. Verteiler nach Anspruch 5, **dadurch gekennzeichnet, dass** die Nuten zwischen Rippen (55) begrenzt sind, die einen T-förmigen Querschnitt aufweisen.

7. Verteiler nach Anspruch 6, **dadurch gekennzeichnet, dass** sich die Rippen (55) auf der Außenseite der Seitenwand (52) befinden.

8. Verteiler nach einem der Ansprüche 4 bis 7, **dadurch gekennzeichnet, dass** er eine Faserauffächerungsanordnung (10) umfasst, die außen mindestens an der Seitenwand (52) montiert ist, wodurch der Faserverteilungsbereich definiert wird, und die mit einer Reihe von Auffächerungskanälen (40) und abgestuften, so genannten vorderen Ausgängen (42) an der Befestigungsachse (3) entlang versehen ist.

9. Verteiler nach Anspruch 8, **dadurch gekennzeichnet, dass** die Auffächerungsanordnung (10) mindestens eine modulare Auffächerungsvorrichtung (11) umfasst.

10. Verteiler nach Anspruch 9, **dadurch gekennzeichnet, dass** die Auffächerungsvorrichtung (11) mindestens einen hinteren Eingang (30) zum Anbringen von Fasern in einer Schutzröhre, die sich an einem hinteren Ende gegenüber den Ausgängen (42) der Auffächerungskanäle (40) befindet, und eine Anbringungsklemme (31), die mit jedem hinteren Anbringungseingang verknüpft ist und diesen ergänzt, umfasst.

11. Verteiler nach Anspruch 10, **dadurch gekennzeichnet, dass** die Anbringungsklemme (31) die Form eines Kamms mit mehreren Anbringungskanälen (34) aufweist, die jeweils in der Lage sind, mindestens eine Fasern enthaltende Röhre aufzunehmen und zu befestigen.

12. Verteiler nach einem der Ansprüche 10 und 11, **dadurch gekennzeichnet, dass** er eine Reihe von Führungskanälen (36) umfasst, die von ersten Rippen (35) begrenzt sind und sich im Anschluss an jeden Anbringungseingang (34) an dem entsprechenden hinteren Endteil (27) der Auffächerungsvorrichtung befinden, um blanke Fasern aufzunehmen und eine eventuelle Vorauffächerung vorzunehmen.

13. Verteiler nach Anspruch 12, **dadurch gekennzeichnet, dass** sich die Auffächerungskanäle (40) auf einem vorderen Endteil (28) der Vorrichtung erstrecken, wobei die vorderen und hinteren Endteile (27, 28) durch einen glatten Zwischenkopplungsteil (29) getrennt sind.

14. Verteiler nach Anspruch 13, **dadurch gekennzeichnet, dass** der Zwischenteil (29) mit abtrennbaren Seitenrändern (12) versehen ist, die jeweils einen zusätzlichen Seitenausgang in Richtung auf mindestens einen anderen entsprechenden Verteiler definieren.

15. Verteiler nach einem der Ansprüche 9 bis 14, **dadurch gekennzeichnet, dass** die Auffächerungskanäle (40) durch mindestens eine zweite Reihe von Rippen (44) begrenzt sind, und die vorderen Ausgänge (42) von mindestens einem Stift (45) begrenzt sind, der die Auffächerungskanäle (40) unterteilt.

16. Verteiler nach Anspruch 15, **dadurch gekennzeichnet, dass** die vorderen Ausgänge (42) den Abstand der Kassetten (2) in dem Träger (1) aufweisen.

17. Verteiler nach einem der Ansprüche 9 bis 16, **dadurch gekennzeichnet, dass** er einen Deckel (13) umfasst, der auf der Auffächerungsanordnung (10) einrasten kann.

18. Verteiler nach Anspruch 17, **dadurch gekennzeichnet, dass** die Auffächerungsanordnung (10) aus zwei Auffächerungsvorrichtungen (10) besteht, die übereinander liegen.

19. Verteiler nach Anspruch 18, **dadurch gekennzeichnet, dass** jede Auffächerungsvorrichtung (10) bogenförmig ist und sich an der Seitenwand (52) entlang, an einem Teil einer so genannten hinteren Wand (53) des Trägers entlang und an einer bogenförmigen hinteren Ecke entlang zwischen den Seiten- und Rückwänden erstreckt.

20. Verteiler nach Anspruch 9, **dadurch gekennzeichnet, dass** der Träger (1) Mittel (56 bis 59) zum Halten der Auffächerungsanordnung (10) umfasst, die gegenüberliegende Ausstülpungen umfassen, die durch die ersten gegenüberliegenden Wänden (50, 51) des Trägers definiert sind und außen an mindestens einer Seitenwand (52) desselben vorstehen, zwischen denen die Auffächerungsanordnung aufgenommen und gehalten wird.

21. Verteiler nach Anspruch 3, **dadurch gekennzeichnet, dass** der Träger (1) und die Kassetten (2) mit sich ergänzenden Mitteln zum Verriegeln jeder Kassette in mindestens einer der offenen und geschlossenen Positionen ausgestattet sind, die einerseits die Führungsachse (9), die von dem Träger getragen wird, und andererseits eine Erhöhung (28), die in mindestens einen der Endteile des Führungslumens (8) der Kassette (2) hereinragt, ausgestattet sind.

22. Verteiler nach Anspruch 4, **dadurch gekennzeichnet, dass** der Träger (1) eine innen vorstehende Kante (66, 66') umfasst und jede Kassette (2) eine elastische Rastlasche (26, 26') umfasst, die der Kante zum Verriegeln der Kassette in der geschlossenen Position in dem Träger entsprechend bereitgestellt wird.

23. Verteiler nach Anspruch 22, **dadurch gekennzeichnet, dass** die Kassetten jeweils einen Finger (25) zum Auswählen und Ergreifen der Kassette in der geschlossenen Position in dem Träger (1) umfassen, der auf einem zugänglichen Umfangsteil der Kassette vorsteht, wenn diese sich in der geschlossenen Position in dem Träger befindet, um die Kassette von ihrer geschlossenen Position in ihre offene Position zu betätigen.

24. Verteiler nach Anspruch 22, **dadurch gekennzeichnet, dass** die Kante (66') zu der Befestigungsachse (3) parallel ist und ihr im Wesentlichen gegenüberliegt und auf der anderen abgeschnittenen lateralen Seite des Trägers (1) gebildet ist, und dass die elastische Lasche (26') mit einem ihrer Enden mit einer anderen vorderen Ecke der Kassette fest verbunden ist und sich seitlich an dieser entlang erstreckt, wodurch sie einen Spielraum zwischen der Ecke und der Kassette einrichtet.

25. Verteiler nach Anspruch 24, **dadurch gekennzeichnet, dass** die elastische Lasche (26') mindestens einen Finger (25') aufweist, der außen vorsteht, um die Kassette auszuwählen und die elastische Lasche gegen die Kassette zu betätigen, um die elastische Lasche und die Kante zu entriegeln.

26. Verteiler nach Anspruch 4, **dadurch gekennzeichnet, dass** der Träger (1) sich ergänzende Gleitschienen (70 bis 74) auf den ersten gegenüberliegenden Wänden (50, 51) zur überlagerten Montage dieser Verteiler umfasst.
